Europäisches Patentamt

European Patent Office

Office européen des brevets

(19)

(11) Publication number : **0 449 366 A1**

(12) # EUROPEAN PATENT APPLICATION

(21) Application number : **91200649.1**

(51) Int. Cl.⁵ : **A01H 4/00, A01G 9/10**

(22) Date of filing : **22.03.91**

(30) Priority : **23.03.90 NL 9000695**

(43) Date of publication of application :
**02.10.91 Bulletin 91/40**

(84) Designated Contracting States :
**AT BE DE DK ES FR GB GR IT LU NL SE**

(71) Applicant : **PERMX B.V.**
**Wildekamp 1b**
**NL-6704 AT Wageningen (NL)**

(72) Inventor : **Van Oeveren, Jacobus Johannes**
**Chemin de la Croix de Chôdes 12**
**B-4890 Malmedy (BE)**

(74) Representative : **Boelsma, Gerben Harm, Ir. et**
**al**
**Octrooibureau Polak & Charlouis Laan Copes**
**van Cattenburch 80**
**NL-2585 GD Den Haag (NL)**

(54) **Method and device for providing access - in a sterile condition - to material packaged within a sealed capsule chain.**

(57)    A method for providing access - in a sterile condition - to material which is packed in a sealed capsule chain (1), more particularly for the purpose of the vegetative propagation of plant material. According to the invention the sealed capsule chain (1) is passed, in a substantially horizonal position - through a bath (2) containing a desinfectant and is then transferred into a substantially upright position, in which an incision is made close to each seal between the successive capsules, while leaving the upper marginal portion of the capsule chain intact.

EP 0 449 366 A1

FIG 1

The invention relates to a method for providing access - in a sterile condition - to material which is packed in a sealed capsule chain, more particularly for the purpose of the vegetative propagation of plant material.

A capsule chain is to be understood as a double-walled band of a suitable plastics material, which is divided - by providing seals at right angles to the longitudinal direction of the band - into a plurality of juxtaposed elongated compartments or "capsules". Such a capsule chain may e.g. be obtained by starting from an extruded tube, which is cut - in a flat-folded state - into two halves along its longitudinal axis, so that two double-walled bands are produced, which are then each divided into capsules.

In NL 8902032 a method for the vegetative propagation of plantlets is described, whereby in a sterile environment starting material is placed in the individual capsules of an upright positioned capsule chain, into which an amounts of nutrient medium for the material to be propagated has been introduced in advance. Upon the introduction of the material to be propagated the capsules are closed by sealing the capsule chain adjacent its upper longitudinal edge. At last the filled and sealed capsule chain is placed - in a packed, e.g. a coiled or zig-zag folded state - into a storage container. The storage container is set aside into a non-sterile storage room for a certain period of time (e.g. a few weeks), in which the starting material is allowed to propagate.

The propagated material is to be cut to starting material for a next propagating process (or rooting process).

The cutting is still taking place by hand, with the aid of a cutting knife and a pair of tweezers and within a sterile cloud to be created on the work spot.

The invention aims at providing a method for treating the capsule chain - filled with propagated material - in such a way that the capsules or groups of capsules are successively presented for being cut at the work spot in an opened and sterile condition, in which the material may be readily removed. It should be noted that the outer side of the capsule - due to its stay in the storage room - is not sterile anymore and consequently may present a risk for infection of the propagated material when removing the latter from the capsule.

According to the invention this aim is achieved in a simple and effective manner, in that the sealed capsule chain is passed, in a substantially horizontal position - through a bath containing a desinfectant and is then transferred into a substantially upright position, in which an incision is made close to each seal between the successive capsules, while leaving the upper marginal portion of the capsule chain intact.

By making these incisions the capsules will be laterally opened so that the propagated plant material may be taken easily, and with a neglectable risk for damaging, laterally out of the opened capsules with the aid of a pair of tweezers. Opening of the capsule chain in this way has the additional advantage, that the unloaded capsules are kept interconnected, which facilitates moving the capsule chain past the work spot and discharging the same.

The desinfecting liquid bath may form an effective transition between the non-sterile room , in which the storage container with the capsule chain to be opened is placed, and the "sterile cloud" in which the opening of the capsule chain, the removal of the propagated material and the cutting of the latter are taking place. A suitable desinfecting liquid is a 70% alcohol solution.

The invention also relates to a device for carrying out the above method. According to the invention this device is characterized by a trough-shaped container for liquid, with substantially horizontally disposed inlet and outlet guide means at opposite sides of said container and a third guide means disposed and between and under said inlet and outlet guide means for guiding a capsule chain unrolling from a poly package, guide and drive means being provided at the outlet side adapted to bring the capsule chain into a substantially upright position and pass the capsule in this position through a cutting station, in which means are provided for making substantially vertical incisions adjacent each seal between successive capsules of the capsule chain.

In a practical embodiment of the invention the inlet and outlet guide means and the guide means therebetween are formed by rotary rollers. Preferably the guide and drive means provided downstream of the container comprise a pair of endless belts, which are guided about pulleys rotating about substantially vertical axes and the opposite runs of which belts being positioned for gripping the marginal portion of the upright positioned capsule chain therebetween.

Fig. 1 is a diagrammatic side view of the device of the invention;

fig. 2 represents a plan view on an enlarged scale of a portion of the device of fig. 1 and

fig. 3 is a diagrammatic cross-sectional view along the line III-III in fig. 1.

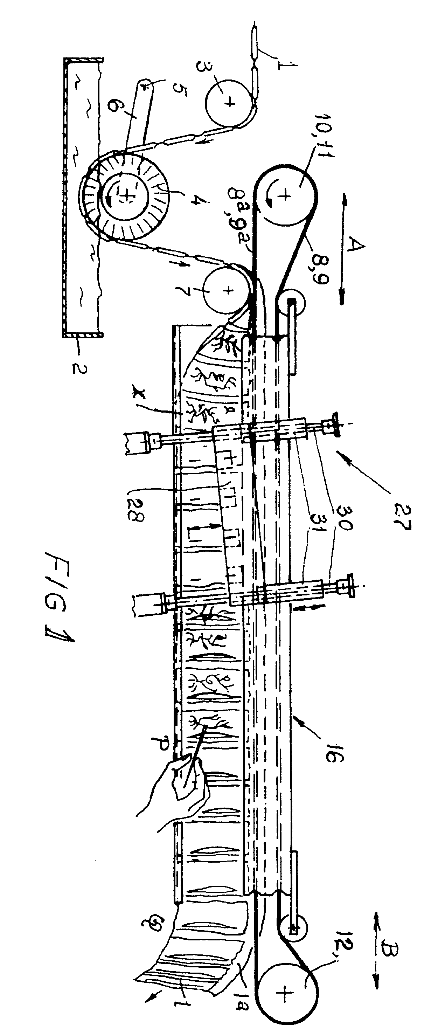

In the drawing 1 designates a sealed capsule chain which is filled e.g. with propagated plant material. From the left side in fig. 1 this capsule chain is unrolled in a substantially horizontal position from a supply coil or package not furher shown. 2 designates the lower portion of a trough-shaped container for a desinfectant, e.g. a 70% alcohol solution. The capsule chain 1 is guided about a first guide roller 3, which may be rotatably mounted between upright and opposite sidewalls (not shown) of the container 2. The capsule chain 1 is guided from the guide roller 3 about a further guide roller 4 which is mounted at a lower level and is carried out as a rotary brush . The rotary brush 4 is rotatably mounted between the free ends of two supporting arms 6, which are pivotally mounted, about a horizontal axis 2, between the upright sidewalls of the container 2. By means of the supporting arms 6 the level of the rotary brush 4 may be adjusted so that the lower portion of the rotary brush - while rotating in the arrow direction - is moving through the desinfecting liquid. The capsule chain passing via the rotary brush 4 through the desinfecting liquid is then guided upwardly towards a further guide roller 7 which is rotatably mounted at the discharge side of the container 2.

The container 2 constitutes a capsule chain desinfecting transitional zone between the non-sterile space to the left of the container and an operational space extending towards the right (fig. 1), in which a so-called "sterile cloud" is provided e.g. by maintaining a vertical sterile air stream therein.

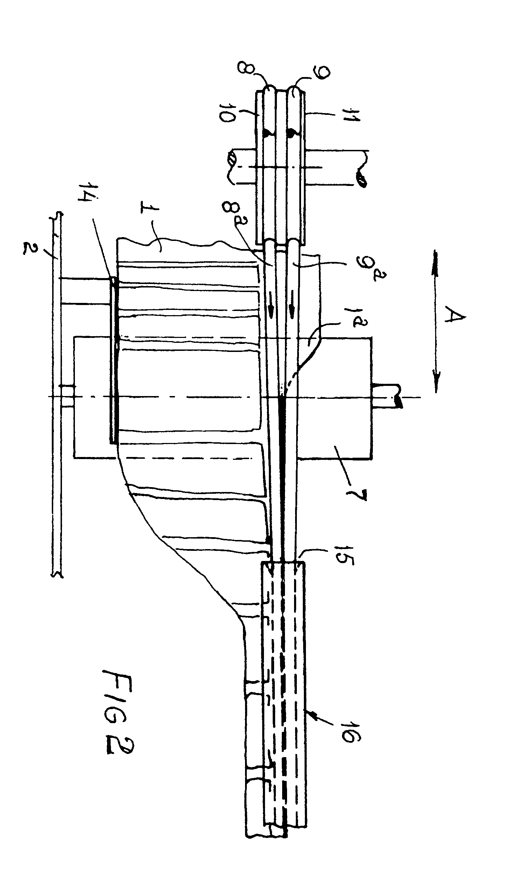

On the downstream side of the guide roller 7 a longitudinal marginal portion 1a of the desinfected capsule chain 1 is gripped - in a substantially vertical plane - between the cooperating runs 8a and 9a of two endless belts 8 and 9 which are guided about pulleys 10, 11 and 12, 13 driven about substantially horizontal axes. The pulleys 10-13 are located to the left of the longitudinal axis of the container 2 (vide fig. 2 ) at a level such that the operative runs 8a, 9a of the belts 8 and 9 are positioned just over the guide roller 7. The operative belt runs 8a and 9a passing from the pulleys 10, 11 are initially moving slightly convergent one relative to the other, so that the marginal portion 1a of the capsule chain 1 will get easily caught - along the trajectory A between the pulleys 10, 11 on the one hand and the guide roller 7 on the other hand - between the two belt runs 8a and 9a, taking into consideration that the capsule chain is controlled therewith as a result of being supported at its lower edge by a fixed guide member 14 adjusted to the width of the capsule chain 1 (fig. 2). The cooperating runs 8a and 9a are moving together at 15 into a elongated guide member 16 extending further into the travelling direction, said guide member consiting of two opposite strips 19 and 20, provided with longitudinal recesses 17 and 18 for accommodating the belt runs 8a and 9a and with longitudinal recesses 24 and 25 for the returning runs. The guide strip 20 is fixedly mounted and fastened to a frame beam 21. On the upper side the guide strip 19 is supporting directly against the fixed strip 20, whereas on the lower side the marginal portion 1a of the capsule chain 1 is clamped between the two belt runs 8a and 9a which are pressed one towards the other. The clamping force can be adjusted by pressing the strip 19, by means of a clamping screw 23 and with the intermediary of a spring 22, more or less tightly. The strips 19 and 20 are formed of a material, e.g. polytetrafluorethylene, that has a low friction coefficient, so that the belt runs 8a and 9a may move with a low frictional resistance across the faces confining the recesses 17 and 18.

The returning runs of the endless belts 8 and 9 are guided through the recesses 24 and 25 under neglectable lateral pressure.

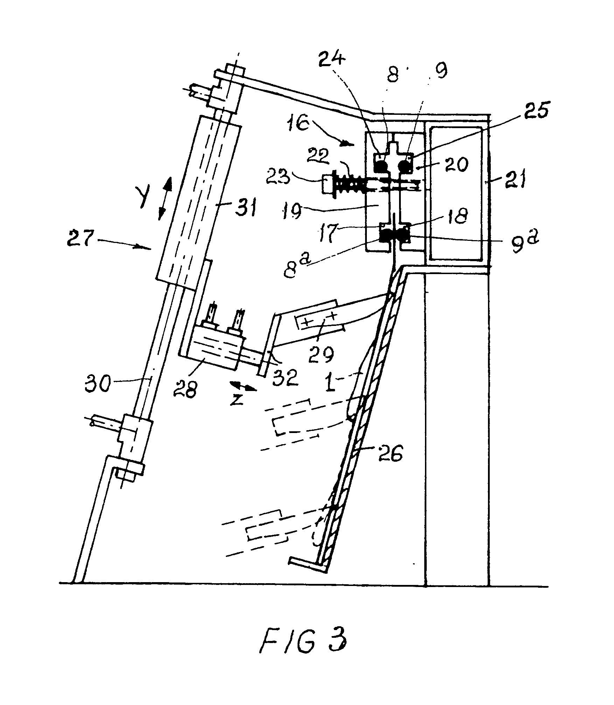

The remainder of the capsule chain will - upon leaving the guide roller 7 - gradually hang down until the position to the right of point x in fig. 1 is reached, where the capsule chain, while suspending from the guide passage 16, gets laterally engaged with a supporting wall 26 which is mounted in a slightly forwardly and downwardly sloping position under said guide passage. The support wall 26 is preferably formed of a transparent material and serves as a base for making incisions in the capsule chain 1 to be opened. The cutting device for making these incisions is designated at 27 (fig. 1 and 3).

An incision is to be made along each vertical seal between the successive capsules. For that purpose the cutting device 27 comprises a support beam 28 for a plurality (e.g. four) of cutting knives 29. The support beam 28 is located at a distance in front of the transparent support wall 26 and mounted for performing a translatory movement in a plane parallel to that of the support wall 26. For this purpose the support beam 28 is fastened to cylindrical guides 31 which are movably mounted on parallel guide rods 30. As seen in the travelling direction, the guide rods 30 are positioned under a small angle of e.g. 5° with respect to the vertical and are positioned parallel to the transparent support wall 26 as seen in a cross-sectional view. In this way the support beam 28 with the cutting knives 29 carried thereby is allowed to perform a motion in the direction of arrow Y (vide fig. 3) . This movement may be e.g. pneumatically controlled .

Positioning the support 28 with the knives 29 under a small angle relative to the vertical enables the incisions to be made in the moving capsule chain 1. It is of importance that the incisions are made in the correct place, i.e. closely adjacent the respective seals. For this purpose the position of the seals may be continuously detected by a suitable optical means and the speed of the capsule chain displacing belt drive may be controlled in the correct relationship with the reciprocating movement of the support beam 28 with the knives 29. As a result of the incisions being made the repective capsules will laterally open so that the propagated plant material may be simply removed (at P in fig. 1) by hand while using a pair of tweezers. A lamp placed behind the transparent wall 26 enables to examine the condition of the propagated plant.

As may be seen in fig. 3, the knives 29 are mounted, either individually or in a group, on a carrier 32, which is mounted for a reciprocating movement relative to the support beam 28 (arrow z) in a transverse direction to the support wall 26. This transverse movability is used e.g. to retract the knives after the latter have completed an incision and before the support beam 28 is returned to its upper position, while it also enables to prevent an incision to be made in a capsule which contains an infected propagated plant, so that the infective plant may be - in an unused and still closed state - be discharged (at Q) together with the unloaded capsules at the end of the travelling path. At the downstream end of the belt guiding member 16 (through trajectory B) the belt runs 8a and 9a are slightly diverging, due to wich the clamping force onto the upper marginal portion 1a, which is kept intact, is removed so that the chain with both the emptied capsules and any capsule which contains infective material and has been kept closed , may be discharged as waste material into a waste container.

## Claims

1. A method for providing access - in a sterile condition - to material which is packed in a sealed capsule chain, more particularly for the purpose of the vegetative propagation of plant material, characterized in that the sealed capsule chain is passed, in a substantially horizontal position - through a bath containing a desinfectant and is then transferred into a substantially upright position, in which an incision is made close to each seal between the succesive capsules, while leaving the upper marginal portion of the capsule chain intact.

2. A device for carrying out the method of claim 1, characterized by a trough-shaped container for desinfecting liquid, with substantially horizontally disposed inlet and outlet guide means at opposite sides of said container and a third guide means disposed between and under said inlet and outlet guide means for guiding a capsule chain unrolling from a supply package, guide and drive means being provided at the outlet side adapted to bring the capsule chain into a substantially upright position and pass the capsule in this position through a cutting station, in which means are provided for making substantially vertical incisions adjacent each seal between successive capsules of the capsule chain.

3. A device according to claim 2, characterized in that the inlet and outlet guide means, as well as the guide means therebetween are formed as rotary rollers.

4. A device according to claim 3, characterized in that the intermediary roller is carried out as a rotary brush which is vertically adjustably mounted between two supporting arms, which are pivotally mounte about a horizontal axis.

5. A device according to claims 2-4, characterized in that the guide and drive means positioned downstream of the container comprise a pair of endless belts, which are guided about pulleys rotating about substantially vertical axes, the opposite runs of which belts being positioned for gripping the upper marginal portion of the upright positioned capsule chain therebetween.

6. A device according to claim 5, characterized in that the operative belt runs are mutually converging into the travelling direction in an area over the outlet guide means and move - downstream of said area - together into a belt guiding member which is provided with a lower passage slot for the marginal portion of the capsule and which extends at least through the length of the cutting station, whereby the belt runs are diverging from the downstream end of the belt guiding member towards the respective pulleys.

7. A device according to claim 6, characterized in that the belt guiding member consists of two strips which are pressed together under an adjustable spring force and which are provided with opposite grooves for accommodating the respective belt runs.

8. A device according to claim 6-8, characterized in that the returning belt runs are also guided through said belt guiding member.

9. A device according to claim 5-8, characterized by a support wall which is suspended from the lower side of the belt guiding member, comprising said passage slot for the marginal portion of the capsule chain, a support beam carrying cutting knives being provided in front of said support wall in a plane parallel to that of the support wall, said support beam being mounted for a substantially vertical reciprocating movement.

10. A device according to claim 9, characterized in that each individual cutting knife is movably mounted in a direction transversely to the supporting wall.

FIG 1

FIG 2

FIG 3

European Patent Office

**EUROPEAN SEARCH REPORT**

Application Number

EP    91 20 0649

| DOCUMENTS CONSIDERED TO BE RELEVANT | | | | |
|---|---|---|---|---|
| Category | Citation of document with indication, where appropriate, of relevant passages | | Relevant to claim | CLASSIFICATION OF THE APPLICATION (Int. Cl.5) |
| A | GB-A-2 076 769 (NATIONAL RESEARCH DEVELOPMENT CORPORATION) <br> * page 1, line 3 - line 12; figures 1,6,8 * <br> * page 2, line 87 - line 97 * | | 1,2,5-8, 10 | A01H4/00 <br> A01G9/10 |
| A,P | WO-A-9 006 058 (AGRISTAR INC) <br> * figures 1-7, 9-11, 15-20 * <br> * page 7, line 29 - page 23, line 3 * <br> * page 24, line 18 - page 26, line 25 * <br> * page 36, line 14 - page 47, line 26 * | | 1-3,5 | |
| A | US-A-4 604 847 (MOULDING JR ET AL) <br> * column 5, line 63 - column 7, line 50; figures 1,11-16 * | | 1,9,10 | |
| A | FR-A-2 119 259 (E.P.REMY & CIE) <br> * page 1, line 27 - page 2, line 4; figures 1,3 * | | 1 | |
| A | FR-A-2 117 234 (SCHWEIZERISCHE ALLUMINIUM AG) <br> * page 1, line 31 - page 2, line 30; figures 1-3 * | | 1 | TECHNICAL FIELDS SEARCHED (Int. Cl.5) |
| A | EP-A-282 230 (AGRISTAR) <br> * page 4, line 26 - page 5, column 35; figures 1-7 * | | 1 | A01H <br> A01G <br> B65B |

The present search report has been drawn up for all claims

| Place of search | Date of completion of the search | Examiner |
|---|---|---|
| THE HAGUE | 05 JULY 1991 | Dissen HD |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)